# FASCICULE DE BREVET EUROPEEN

(11) **EP 3 637 321 B1**
(45) Date de publication et mention de la délivrance du brevet: **07.06.2023**
(21) Numéro de dépôt: 19201547.7
(22) Date de dépôt: 04.10.2019
(51) Int. Cl.: G06K 19/07, G06K 7/00

(54) **RECHARGE D'UNE BATTERIE EMBARQUÉE DANS UNE CARTE À PUCE**
AUFLADEN EINER BATTERIE IN EINER CHIPKARTE
RECHARGING A BATTERY EMBEDDED IN A CHIP CARD

(30) Priorité: 12.10.2018 FR 1859466
(43) Date de publication de la demande: 15.04.2020
(73) Titulaire: IDEMIA France, 92400 Courbevoie (FR)
(72) Inventeur: MARTIN-MARTINASSO Ludovic, 92400 Courbevoie (FR); WAKNIOUN, Aissa, 92400 Courbevoie (FR)
(74) Mandataire: Idemia

(56) Documents cités:
- WO-A1-2016/168457
- US-A1- 2010 259 216
- US-A1- 2016 004 945

## Description

### Arrière-plan de l'invention

La présente invention se situe dans le domaine général des cartes à puce et concerne plus particulièrement la recharge électrique de cartes à puce comportant une batterie.

L'invention s'applique plus particulièrement, mais de manière non exclusive, aux cartes à puce conformes à la norme ISO 7816. L'invention vise notamment la recharge d'une batterie embarquée dans une carte à puce fonctionnant selon le protocole EMV (pour « *Europay Mastercard Visa* »), bien que d'autres protocoles soient possibles comme expliqué par la suite.

De manière générale, une carte à puce est conçue pour communiquer avec un dispositif externe à cette carte, autrement appelé terminal ou lecteur. Les cartes à puce permettent d'effectuer divers types de transactions, telles que par exemple des transactions de paiement, de prélèvement ou encore d'authentification du porteur. Les cartes à puce pour applications bancaires (carte de crédit, carte de débit etc.), par exemple, sont aptes à coopérer avec des terminaux de paiement ou des distributeurs automatiques de billets (DAB) pour réaliser divers opérations financières.

Pour réaliser une transaction, le porteur de la carte à puce doit en général insérer la carte dans un lecteur (mode avec contact) ou, le cas échéant, peut présenter sa carte à proximité du lecteur afin d'établir une communication sans contact avec le lecteur (mode sans contact).

De façon connue, une carte à puce comporte une puce électronique embarquée dans un corps de carte. Si la carte à puce est destinée à communiquer par contact avec un lecteur, elle dispose de contacts externes disposés en surface du corps de carte et configurés pour coopérer par contact avec un lecteur prévu à cet effet. Par ailleurs, si la carte à puce est destinée à communiquer sans contact avec un lecteur, elle embarque notamment une antenne radiofréquence (RF) pour échanger des signaux RF avec le lecteur.

Plus récemment, de nouvelles cartes à puce ont vu le jour, celles-ci pouvant embarquer divers composants plus ou moins complexes permettant la mise en oeuvre de fonctionnalités supplémentaires. Certaines cartes à puce embarquent par exemple un écran, un voyant lumineux, un bouton ou encore un capteur biométrique.

De tels composants embarqués dans une carte à puce nécessitent cependant une alimentation électrique non négligeable pour pouvoir fonctionner. Les ressources et capacités croissantes des cartes à puce s'accompagnent donc d'une augmentation significative de leur consommation électrique.

A cet effet, ces cartes à puce peuvent embarquer également une pile servant de source d'alimentation électrique interne, mais le recours à une pile n'est pas toujours adapté dans la mesure il n'est généralement pas possible de la recharger, ce qui limite par conséquent la durée de vie de la carte à puce.

Pour répondre aux besoins grandissants en termes d'alimentation électrique, il est également connu d'intégrer une batterie rechargeable dans une carte à puce. Il a cependant été constaté que la recharge d'une telle batterie rechargeable dans une carte à puce n'est en général pas gérée de manière satisfaisante, ce qui limite l'efficacité de la batterie et diminue sa durée de vie.

Il existe donc un besoin pour une solution permettant d'alimenter électriquement de façon efficace au moins un composant électronique embarqué dans une carte à puce. En particulier, un besoin existe pour recharger efficacement une batterie embarquée dans une carte à puce afin notamment d'optimiser les performances de la batterie, et par voie de conséquence, de la carte à puce.

Le document US 2010/259216 A1 divulgue un procédé pour recharger la batterie d'un objet portable communiquant avec un lecteur.

Le document US 2016/004945 A1 divulgue une carte de paiement rechargeable qui peut collecter de l'énergie depuis des lecteurs de carte.

Le document WO 2016/168457 A1 divulgue une carte à circuit imprimé (PCB) avec une source d'alimentation. Le PCB et la source d'alimentation peuvent être insérés dans un petit dispositif électronique, tel qu'une carte de transaction dynamique.

### Objet et résumé de l'invention

L'invention est définie dans le jeu de revendications ci-joint.

Comme indiqué ci-dessus, la gestion de l'alimentation électrique dans les cartes à puce embarquant une batterie interne n'est pas aujourd'hui satisfaisante. L'augmentation de la complexité des cartes à puce, et en particulier l'intégration de composants de plus en plus nombreux et complexes (capteurs, écrans...), entraînent une augmentation significative de la consommation électrique dans ces cartes.

Les contraintes techniques importantes, notamment en ce qui concerne l'espace réduit disponible dans les cartes à puce, rend la gestion des batteries embarquées encore plus compliquée.

Dans la vie d'une batterie, celle-ci connaît une alternance de phases de recharge et de phases de décharge.

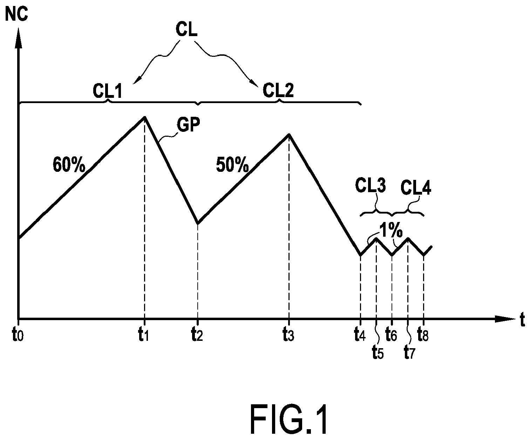

La **figure 1** illustre schématiquement un graphique GP, représentant le niveau de charge NC d'une batterie au cours du temps dans un exemple particulier, cette batterie étant par exemple embarquée dans une carte à puce.

Dans ce document, on définit le niveau de charge NC d'une batterie en pourcentage (%) par rapport au niveau de charge total qu'elle peut intrinsèquement supporter.

Comme représenté en **figure 1****,** à un instant t donné, la batterie par nature se décharge au cours du temps et doit donc être rechargée régulièrement pour maintenir un niveau de charge NC suffisant pour permettre une utilisation normale de la carte à puce. Au cours du temps, le niveau de charge NC traverse une série de cycles CL, dits « cycles de recharge » ou « cycles de recharge/décharge », chacun de ces cycles étant défini par deux phases consécutives, à savoir : une phase de recharge et une phase de recharge. Comme indiqué par la suite, les phases de recharge et décharge d'un cycle ne sont pas nécessairement complètes. Un cycle de recharge peut présenter diverses amplitudes de niveau de charge NC (amplitude maximale : de 0 à 100 %).

L'évolution du niveau de charge NC dépend de divers facteurs dont notamment : les caractéristiques de la batterie, son environnement, son utilisation... Lors d'une phase de recharge, la batterie entreprend un processus de collecte d'énergie permettant d'augmenter le niveau de charge NC, l'évolution du niveau de charge NC dépendant en particulier du temps de recharge et de l'alimentation électrique fournie à la batterie.

Dans l'exemple représenté en **figure 1****,** la batterie est ainsi soumise à 4 cycles de recharge successifs CL1-CL4 :
- cycle CL1 (entre t0 et t2) : la batterie connaît une phase de recharge entre les instants t0 et t1 augmentant son niveau de charge NC de 60%, puis une phase de décharge entre t1 et t2 ;
- cycle CL2 (entre t2 et t4) : la batterie connaît une phase de recharge entre les instants t2 et t3 augmentant son niveau de charge NC de 50%, puis une phase de décharge entre t3 et t4 ;
- cycle CL3 (entre t4 et t6) : la batterie connaît une courte phase de recharge entre les instants t4 et t5 puis une phase de décharge entre t5 et t6 : et
- cycle CL4 (entre t6 et t8) : la batterie connaît à nouveau une courte phase de recharge entre les instants t6 et t7 puis une phase de décharge entre t7 et t8.

La configuration de chaque cycle de recharge CL (forme du pic représentant l'évolution du niveau de charge NC) peut varier selon le cas. Il est fréquent pour une batterie de ne pas atteindre son niveau de charge NC maximal lors d'une phase de recharge. De même, on évite en général d'épuiser complètement une batterie lors d'une phase de décharge.

Comme représenté en **figure 1****,** des micro-recharges tels que celles réalisées lors des cycles CL3 et CL4 sont possibles au cours desquelles une augmentation très faible (de 0,5 ou 1% par exemple) du niveau de charge NC de la batterie est atteinte. Ce phénomène de micro-recharge peut avoir diverses origines.

Or, il a été observé que de telles micro-recharges ont un effet néfaste sur les performances d'une batterie, et notamment une batterie embarquée dans une carte à puce. Les batteries sont généralement capables de supporter un nombre de cycles de recharge limité dans leur vie (ce nombre étant situé par exemple entre 300 et 500 cycles de recharge). Une fois ce nombre de cycle critique atteint, les performances de la batterie, et en particulier son autonomie, diminuent sensiblement.

Pour recharger efficacement une batterie embarquée dans une carte à puce, il a été observé qu'il est nécessaire de délivrer une alimentation électrique stable pendant une période de temps suffisante pour permettre à la batterie d'atteindre un niveau de charge seuil prédéterminé (qui peut être inférieur ou égal à sa capacité nominale). En particulier, l'alimentation électrique ne doit pas être interrompue de façon précoce avant d'avoir atteindre ce niveau de charge seuil, ce qui permet ensuite d'assurer l'alimentation de la carte à puce sans source d'énergie extérieur pour exécuter une ou plusieurs opérations (transaction financière, authentification, communication Bluetooth, affichage d'un cryptogramme dynamique ...).

Il a été envisagé de recharger la batterie interne d'une carte à puce en utilisant un terminal externe avec lequel la carte à puce coopère par contact pour traiter une transaction, de type EMV ou autre. Cependant, la recharge de la batterie n'est pas toujours satisfaisante car il est difficile d'assurer une alimentation stable de la batterie par le terminal externe. En effet, lors d'une transaction EMV par exemple, les échanges entre le terminal externe (le lecteur) et la carte à puce sont très variables et sont sujets à des fluctuations ou interruptions lors du processus de recharge de la batterie. Ainsi, lors de certains traitements effectués par une carte à puce lors d'une transaction EMV (traitements cryptographiques notamment), la consommation électrique de la carte à puce peut augmenter considérablement, limitant ainsi l'alimentation électrique qui reste disponible pour recharger la batterie embarquée.

L'instabilité de l'alimentation, et plus particulièrement l'interruption d'une phase de recharge, dégradent les résultats en termes de recharge et accélèrent le vieillissement de la batterie, réduisant ainsi sa durée de vie.

L'invention vise donc à améliorer la gestion de la recharge électrique d'une batterie embarquée dans une carte à puce, en prenant en compte notamment les contraintes et observations indiquées ci-avant.

A cet effet, la présente invention concerne un procédé de contrôle mis en oeuvre par une carte à puce comportant une batterie rechargeable, le procédé comprenant :
- traitement d'une transaction au cours de laquelle la carte à puce communique avec un terminal externe avec lequel ladite carte à puce est couplée ;
- réception, au cours dudit traitement de la transaction, d'une commande de transaction prédéterminée requérant un temps de traitement, par ladite carte à puce, suffisamment long pour permettre une recharge de la batterie à au moins un premier niveau de charge seuil prédéterminé ; et
- sur détection de ladite commande de transaction prédéterminée, déclenchement de la recharge de la batterie en utilisant une alimentation électrique délivrée par le terminal externe pour atteindre au moins le premier niveau de charge seuil prédéterminé.

L'invention permet de mettre en œuvre une recharge électrique intelligente de la batterie, comme expliqué ci-après.

Selon un mode de réalisation particulier, le premier niveau de charge seuil prédéterminé correspondant à au moins 50% de la capacité de charge maximale de la batterie. Il est ainsi possible d'éviter la réalisation de micro-charges de la batterie et donc d'optimiser les performances et la durée de vie de la batterie.

Selon un mode de réalisation particulier, la carte à puce déclenche ladite recharge sur réception de ladite commande de transaction, seulement si le niveau de charge courant de la batterie est inférieur ou égal à un niveau de charge minimum prédéterminé.

Selon un mode de réalisation particulier, la transaction est une transaction de paiement de type EMV, MONEO ou GELDKARTE.

Selon un mode de réalisation particulier, la transaction est une transaction de type EMV, ladite commande de transaction prédéterminée étant l'une parmi les commandes APDU suivantes au sens du standard EMV : GPO, GAC et VERIFICATION DE PIN.

Selon un mode de réalisation particulier, la transaction est une transaction de type MONEO, ladite commande de transaction prédéterminée étant l'une parmi les commandes APDU suivantes : DEBIT, CONTRE-PASSATION DE DEBIT et VERIFICATION DE PIN ;

Selon un mode de réalisation particulier, la transaction est une transaction de type GELDKARTE, ladite commande de transaction prédéterminée étant l'une parmi les commandes APDU suivantes : DEBIT et REMBOURSEMENT.

Selon un mode de réalisation particulier, le procédé comprend en outre l'arrêt de la recharge de la batterie sur détection que le niveau de charge de la batterie a atteint un deuxième niveau de charge seuil prédéterminé. Ce deuxième niveau de charge seuil est supérieur ou égal au premier niveau de recharge seuil.

Selon un mode de réalisation particulier, l'alimentation électrique est reçue, depuis le terminal externe, par contact externe.

Selon un mode de réalisation particulier, la carte à puce est de type ISO 7816, l'alimentation électrique étant reçue, depuis le terminal, par contact via le contact Vcc connectée au terminal externe.

Selon un mode de réalisation particulier, la carte à puce déclenche la recharge de la batterie, simultanément par contact et en sans contact, depuis le terminal externe.

Selon un mode de réalisation particulier, le procédé comprend en outre, préalablement audit déclenchement de la recharge de la batterie : sur détection que le niveau de charge de la batterie est inférieur à un troisième niveau de charge seuil, envoi au terminal externe d'une première commande requérant que la transaction soit traitée par contact.

Selon un mode de réalisation particulier, le procédé comprend en outre, préalablement audit déclenchement de la recharge de la batterie : sur détection que le niveau de charge de la batterie est inférieur au troisième niveau de charge seuil, envoi d'une deuxième commande à une interface utilisateur de la carte à puce pour causer la présentation à un utilisateur d'une notification indiquant que la transaction doit être traitée par contact.

Selon un mode de réalisation particulier, le procédé comprend en outre : envoi au terminal externe d'une commande de temporisation requérant que le terminal externe prolonge artificiellement un temps de traitement nécessaire pour réaliser un traitement au cours de ladite transaction, de façon à permettre la réalisation de ladite recharge de la batterie.

Selon un mode de réalisation particulier, la transaction est de type EMV, la commande de temporisation requérant le prolongement d'un temps de traitement utilisé par ledit terminal externe pour réaliser un traitement dans les limites autorisées par le standard EMV.

Selon un mode de réalisation particulier, la carte à puce comprend une pile non rechargeable, le procédé comprenant en outre : sur détection que le niveau de charge de la batterie est inférieur à un quatrième niveau de charge seuil, déclenchement de la recharge de la batterie à partir de la pile pour suppléer ou complémenter l'alimentation électrique délivrée par le terminal externe. Le quatrième niveau de charge seuil est par exemple inférieure ou égale au premier niveau de charge seuil.

Selon un mode de réalisation particulier, sur détection que le niveau de charge de la batterie augmente jusqu'à atteindre un cinquième niveau de charge seuil, interruption de la recharge de la batterie par la pile de sorte que la recharge de la batterie se poursuive uniquement à partir de l'alimentation électrique délivrée par le terminal externe. La carte à puce peut ainsi rebasculer uniquement sur l'alimentation du terminal pour préserver la pile interne de la carte à puce et ainsi prolonger sa durée de vie.

Dans un mode particulier de réalisation, les différentes étapes du procédé de contrôle sont déterminées par des instructions de programmes d'ordinateurs.

En conséquence, l'invention vise aussi un programme d'ordinateur sur un support d'informations (ou support d'enregistrement), ce programme étant susceptible d'être mis en oeuvre dans une carte à puce, ou plus généralement dans un ordinateur, ce programme comportant des instructions adaptées à la mise en œuvre des étapes d'un procédé de de contrôle tel que défini dans ce document.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise également une carte à puce correspondante. Plus particulièrement, l'invention concerne une carte à puce comprenant :
- une batterie rechargeable ;
- un module de traitement configuré pour traiter une transaction au cours de laquelle la carte à puce communique avec un terminal externe avec lequel ladite carte à puce est couplée ;
- un module de communication configuré pour recevoir, au cours dudit traitement de la transaction, une commande de transaction prédéterminée requérant un temps de traitement, par ladite carte à puce, suffisamment long pour permettre une recharge de la batterie à au moins un premier niveau de charge seuil prédéterminé ; et
- un module de contrôle configuré, sur détection que ladite commande de transaction prédéterminée est reçue, pour déclencher la recharge de la batterie en utilisant une alimentation électrique délivrée par le terminal externe pour atteindre au moins le premier niveau de charge seuil prédéterminé.

A noter que les différents modes de réalisation mentionnés dans ce document en relation avec le procédé de contrôle de l'invention ainsi que les avantages associés s'appliquent de façon analogue à la carte à puce de l'invention. Pour chaque étape du procédé de contrôle de l'invention, la carte à puce de l'invention peut comprendre un module correspondant configuré pour réaliser ladite étape.

Selon un mode de réalisation, l'invention est mise en oeuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit dans ce document pour le module concerné.

De la même manière, un composant matériel correspond à tout élément d'un ensemble matériel (ou hardware) apte à mettre en oeuvre une fonction ou un ensemble de fonctions, selon ce qui est décrit dans ce document pour le module concerné. Il peut s'agir d'un composant matériel programmable ou avec processeur intégré pour l'exécution de logiciel.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
- la figure 1 représente schématiquement l'évolution du niveau de charge d'une batterie au cours de cycles de recharge successifs ;
- la figure 2 est un diagramme décrivant de façon générale le traitement d'une transaction selon le protocole EMV ;
- la figure 3 représente schématiquement un environnement comprenant une carte à puce selon un mode de réalisation particulier de l'invention ;
- la figure 4 représente schématiquement les modules fonctionnels mis en oeuvre par une carte à puce selon un mode de réalisation particulier de l'invention ;
- la figure 5A représente, sous forme d'un diagramme, les étapes d'un procédé de contrôle conforme à un mode de réalisation particulier de l'invention ;
- la figure 5B représente schématiquement un procédé de contrôle selon un mode de réalisation particulier ;
- la figure 6 représente, sous forme d'un organigramme, les étapes d'un procédé de contrôle conforme à un mode de réalisation particulier de l'invention ;
- la figure 7 représente, sous forme d'un organigramme, les étapes d'un procédé de contrôle conforme à un mode de réalisation particulier de l'invention ; et
- la figure 8 représente, sous forme d'un organigramme, les étapes d'un procédé de contrôle conforme à un mode de réalisation particulier de l'invention.

### Description détaillée de plusieurs modes de réalisation

Comme indiqué précédemment, l'invention concerne la gestion de l'alimentation électrique dans une carte à puce (dite aussi « carte à microcircuit ») embarquant une batterie rechargeable, et concerne plus particulièrement la recharge électrique d'une telle batterie embarquée.

L'invention propose d'optimiser le processus de recharge électrique d'une batterie interne dont est équipée une carte à puce.

L'invention, selon différents modes de réalisation, porte sur un procédé de contrôle mis en œuvre par une carte à puce embarquant au moins une batterie rechargeable. La carte à puce peut traiter une transaction avec un terminal externe et, sur détection d'une commande de transaction prédéterminée provenant du terminal externe, la carte à puce est configurée pour déclencher la recharge de la batterie en utilisant une alimentation électrique délivrée par le terminal externe.

En particulier, l'invention vise un procédé de contrôle mis en œuvre par une carte à puce comportant une batterie rechargeable, le procédé comprenant : un traitement d'une transaction au cours de laquelle la carte à puce communique avec un terminal externe avec lequel ladite carte à puce est couplée ; la réception, au cours dudit traitement de la transaction, d'une commande de transaction prédéterminée requérant un temps de traitement, par ladite carte à puce, suffisamment long pour permettre une recharge de la batterie à au moins un premier niveau de charge seuil prédéterminé ; et, sur détection de ladite commande de transaction prédéterminée, le déclenchement de la recharge de la batterie en utilisant une alimentation électrique délivrée par le terminal externe pour atteindre au moins le premier niveau de charge seuil prédéterminé.

Comme expliqué par la suite, l'invention permet de mettre en oeuvre une recharge électrique intelligente de la batterie. La carte à puce est en effet capable de commander la recharge de la batterie, à partir de l'alimentation délivrée par le terminal externe, au moment le plus opportun pendant la transaction en cours, c'est-à-dire le moment offrant les meilleures conditions de stabilité de l'alimentation électrique ainsi qu'un risque limité que la recharge soit interrompue de façon précoce, avant achèvement du processus de recharge. Pour ce faire, la carte à puce de l'invention déclenche la recharge sur détection d'une commande de transaction prédéfinie, ce qui permet de choisir une période de temps optimale dans le déroulement de la transaction pour effectuer la recharge. Grâce à l'invention, la phase de la transaction pendant laquelle la recharge est effectuée est sélectionnée de sorte à assurer une certaine stabilité de l'alimentation électrique pendant un temps suffisant à la batterie embarquée pour qu'un niveau de charge désiré soit atteint, et ce en limitant les risques d'une interruption inopinée du processus de recharge.

L'invention vise également la carte à puce correspondante, ainsi que le programme d'ordinateur correspondant.

D'autres aspects et avantages de la présente invention ressortiront des exemples de réalisation décrits ci-dessous en référence aux dessins mentionnés ci-avant.

Dans ce document, des exemples de mise en oeuvre de l'invention sont décrits dans le cadre d'une carte à puce conforme à la norme ISO 7816, bien que d'autres implémentations soient possibles.

De même, on envisage par la suite une carte à puce conforme à la norme EMV. Comme indiqué plus en détail ultérieurement, on comprendra cependant que l'invention ne s'applique pas de manière exclusive au standard EMV mais peut s'appliquer à d'autres protocoles, tels que les protocoles de paiement MONEO^{™} ou GELDKARTE^{™}, par exemple.

EMV est le protocole standardisé utilisé aujourd'hui majoritairement dans le monde pour sécuriser notamment les transactions de paiement effectuées par des cartes à puce.

Le protocole EMV a été conçu pour diminuer les risques de fraudes lors d'une transaction de paiement en permettant notamment l'authentification à la fois de la carte à puce et de son porteur. Ce processus d'authentification fait appel à une combinaison de cryptogrammes (ou clés cryptées) et de signatures numériques et nécessite éventuellement la saisie d'un code secret (appelé communément code PIN) par le porteur de la carte.

Selon le type de carte à puce utilisée, la situation, ou encore le montant considéré, une carte EMV peut fonctionner en ligne ou hors ligne. En mode en ligne, la carte EMV communique, via le lecteur, avec un serveur distant (un serveur de la banque émettrice de la carte, par exemple) afin de vérifier la validité de la transaction en cours. En revanche, si la carte EMV fonctionne en mode hors ligne, celle-ci applique des critères de vérification préenregistrés pour décider si la transaction doit être autorisée ou refusée.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

La notion de transaction est ici entendue au sens large et comprend par exemple, dans le domaine bancaire, aussi bien une transaction de paiement ou de transfert que d'une consultation d'un compte bancaire sur un terminal bancaire. L'invention est décrite ici dans le cadre d'une carte de paiement destinée à réaliser des transactions bancaires selon le protocole EMV. On comprendra que d'autres types de transactions ou opérations sont envisageables dans le cadre de l'invention.

Afin de faciliter la compréhension de l'invention, on décrit à présent, en référence à la **figure 1****,** un exemple d'un traitement d'une transaction conforme au protocole EMV, réalisé par une carte à puce 100 en coopération avec un terminal externe (ou lecteur) 110. Le terminal 2 est apte à communiquer avec un serveur bancaire 120 associé à l'émetteur de la carte à puce 100. Dans cet exemple, la carte à puce 100 est une carte de paiement et le lecteur 110 est un terminal de paiement.

Comme indiqué ci-après, la carte à puce 100 fonctionne ici en mode avec vérification du code secret (code PIN) bien que l'on puisse envisager des variantes selon lesquelles la carte à puce 100 ne procède pas à la vérification du code secret (mode sans vérification du code secret).

Une carte à puce EMV de paiement peut contenir différentes applications bancaires permettant par exemple de fonctionner en mode « carte de crédit » ou « carte de débit » dans un point de vente ou encore d'interagir avec un guichet automatique bancaire.

On suppose ici que le porteur insert la carte à puce 100 dans le terminal 110 ou initie une transaction sans contact, notée TR0, en présentant la carte à puce 100 à proximité du terminal 110.

Le protocole EMV comprend une phase préliminaire PHP destinée à préparer la carte à puce 100 et le lecteur 110 à la mise en oeuvre de la transaction TR0. Différents messages de transaction conformes au protocole EMV sont échangés entre la carte à puce 100, le terminal 110 et (dans cet exemple) le serveur bancaire 120 au cours de la transaction TR0.

Plus précisément, lors de la phase préliminaire PHP, le terminal 110 transmet (E2) un message RESET (RST) à la carte de paiement 100. Cette dernière y répond (E4) par un message ANSWER TO RESET (ATR).

La réception de la commande RST (E2), par la carte à puce, marque le début de la transaction EMV.

Le terminal 110 tente ensuite de choisir l'application appropriée sur la carte de paiement 100. Pour ce faire, le terminal 110 envoie (E6) à la carte à puce 100 une commande SELECT FILE afin de demander à la carte à puce les applications que cette dernière est capable d'exécuter. En réponse, la carte à puce 100 transmet (E8) au lecteur 2 une liste des différentes applications qu'elle peut mettre en oeuvre. Le porteur peut alors sélectionner via le terminal 110 le mode de transaction souhaité, déclenchant ainsi l'envoi (E10) vers la carte à puce 100 d'une commande SELECT APPLICATION avec en paramètre l'identifiant de l'application sélectionnée.

Le terminal 110 envoie (E10) ensuite une commande GET PROCESSING OPTIONS (GPO), bien connue de l'homme du métier, à la carte à puce 100.

En réponse, la carte à puce 100 envoie (E14) au terminal 110 une première série d'informations, telles que l'AIP (pour « *Application Interchange Profile* ») qui indique au terminal 110 les différentes opérations à faire pour mener à bien la transaction. La carte 100 envoie (E16) également un message AFL (pour « *Application File Locator* ») qui indique la liste des données disponibles au niveau de l'application dans la carte à puce 100 et que le terminal 110 doit aller lire pour pouvoir réaliser la transaction TR0. Le terminal 110 lit (E18-E20) ainsi les informations spécifiées dans l'AFL. Pour ce faire, le terminal 110 envoie (E18) une ou plusieurs commandes de lecture READ RECORD à la carte à puce 100 et reçoit (E20) en retour les informations demandées (appelés RECORDS).

Les informations lues (E18-E20) par le terminal 110 dans la carte à puce 100 comprennent par exemple la date d'expiration de la carte à puce 100, le numéro de compte associé, une signature numérique pour authentifier la carte 100, des paramètres de contrôle à utiliser par la suite pour réaliser la transaction, et/ou des listes d'objets dites listes CDOL (pour « *Card Data Object List* »)*.*

Divers modes de réalisation sont envisageables. Dans cet exemple, le terminal 110 réalise (E22) ensuite une étape d'analyse à partir des informations fournies (E20) par la carte à puce 100. Si l'authentification associée à la carte à puce 100 échoue, si une anomalie est détectée ou encore si un risque trop important est détecté, le terminal 110 peut refuser la transaction. On suppose ici que l'analyse E22 est passée avec succès.

Le traitement de la transaction TR0 selon le protocole EMV se poursuit avec une phase d'authentification du porteur de la carte à puce 100 selon l'une des méthodes listées et supportées par ladite carte. Le terminal 110 détermine le procédé d'authentification du porteur à appliquer en fonction des informations précédemment reçues dans les paramètres de contrôle. Cette phase permet en particulier au terminal 110 de déterminer si la transaction est effectuée en mode avec vérification du code PIN ou en mode sans vérification du code PIN.

Dans cet exemple, où le mode avec vérification du code PIN est mis en oeuvre, le porteur est invité à saisir son code PIN à l'aide du clavier dont est généralement muni le terminal 110. Le terminal 110 envoie (E24) alors à la carte à puce 100 une requête VERIFY PIN de vérification du code PIN saisi par le porteur. La carte à puce 100 compare (E26) alors le code PIN saisi par le porteur avec un code PIN de référence stocké dans sa mémoire et en déduit si le porteur est authentique ou non.

Si le code PIN saisi est valide, la carte à puce 100 transmet (E28) un message OK d'authentification positive au terminal. Dans le cas contraire, la carte envoie (E28) un message de refus au terminal 110. On ne s'intéresse ici qu'au cas d'une vérification de code PIN hors ligne, c'est-à-dire sans que le terminal 110 fasse appel à l'émetteur de la carte à puce dans le processus de vérification du code PIN, bien que cela soit également possible.

Une fois le porteur authentifié, le protocole EMV se poursuit avec une phase de vérification de la transaction TR0. Plus précisément, le terminal 110 génère puis envoie (E30) à la carte à puce 100 une commande GAC (pour GENERATE AC ou « *Generate Application Cryptogram* ») bien connue de l'homme du métier. Cette commande GAC peut comprendre diverses données demandées préalablement par la carte à puce 100. Typiquement, la commande GAC contient des informations telles qu'au moins l'une parmi le montant de la transaction en cours, la devise utilisée, le type de transaction, etc.

En réponse à la commande GAC, la carte à puce 100 réalise (E32) une étape d'analyse, dite aussi CRM (pour « *Card Risk Management* »), comprenant certaines vérifications sécuritaires prédéterminées. Le nombre et la nature de ces vérifications ne sont pas normalisés par le protocole EMV et peuvent varier selon le cas.

A l'issue de l'analyse E32, la carte à puce 100 répond au terminal 110 en envoyant (E34) un cryptogramme (ou certificat cryptographique). La réponse de la carte dépend notamment du paramétrage de la carte 100 effectué par la banque émettrice.

Dans cet exemple, la carte à puce 100 transmet (E34) un cryptogramme ARQC (pour *« Autorisation Request Cryptogram* ») indiquant que la carte à puce souhaite poursuivre la transaction en ligne avec le serveur bancaire 120 de l'émetteur de la carte. Le traitement en ligne d'une transaction EMV permet à un serveur distant (ici le serveur bancaire 120) de réaliser des vérifications complémentaires.

Le terminal 110 transmet (E36) ainsi le cryptogramme ARQC au serveur bancaire 120 au niveau duquel est réalisé (E38) une analyse à partir des informations reçues. Cette analyse E38 comprend typiquement un certain nombre de vérifications afin de s'assurer que la transaction est valide. Le terminal 110 reçoit (E40) en réponse un message crypté ARPC indiquant la décision de l'émetteur. Le terminal 110 transmet (E42) ce message ARPC à la carte de paiement 100 afin de lui indiquer la décision prise par l'émetteur.

Si la carte à puce 100 accepte la transaction, celle-ci envoie (E44) en réponse un cryptogramme de type TC (transaction acceptée) au terminal 110. Dans le cas contraire, la carte à puce 100 envoie (E44) un cryptogramme de type AAC indiquant le refus de la transaction.

Les messages échangés selon le protocole EMV, notamment entre la carte à puce 100 et le terminal 110, constituent des messages de transaction destinés à permettre le traitement d'une transaction par la carte à puce 100 en coopération avec le terminal 110.

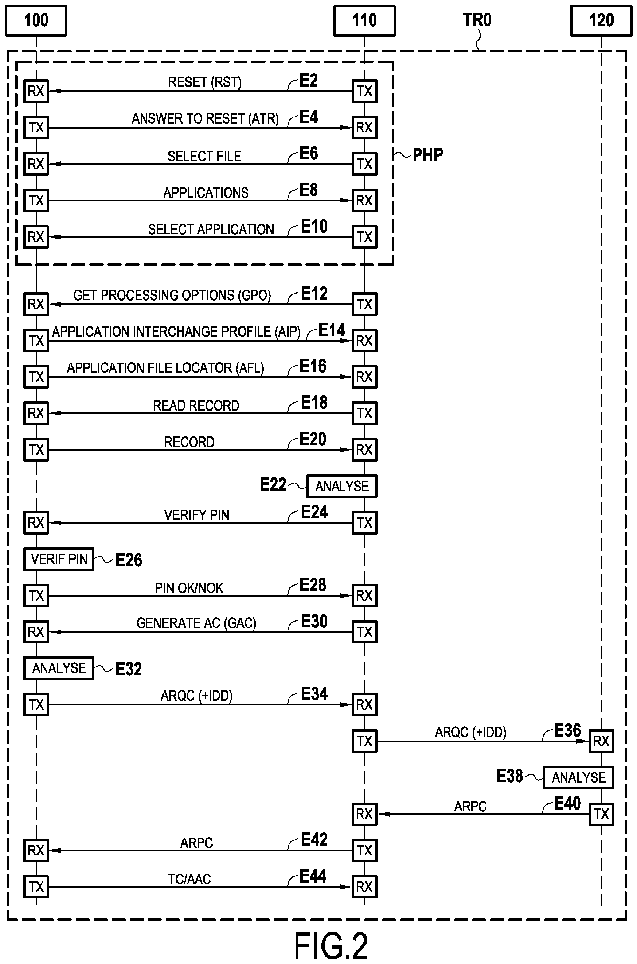

Il convient de rappeler ici que le déroulement du protocole EMV décrit ci-dessus en référence à la **figure 2** ne constitue qu'un exemple non limitatif. Le protocole EMV offre en effet de nombreuses alternatives. Il incombe aux intégrateurs de faire les choix nécessaires pour adapter l'exécution du protocole selon les besoins (méthode d'authentification du porteur, transaction en ligne ou hors ligne etc.).

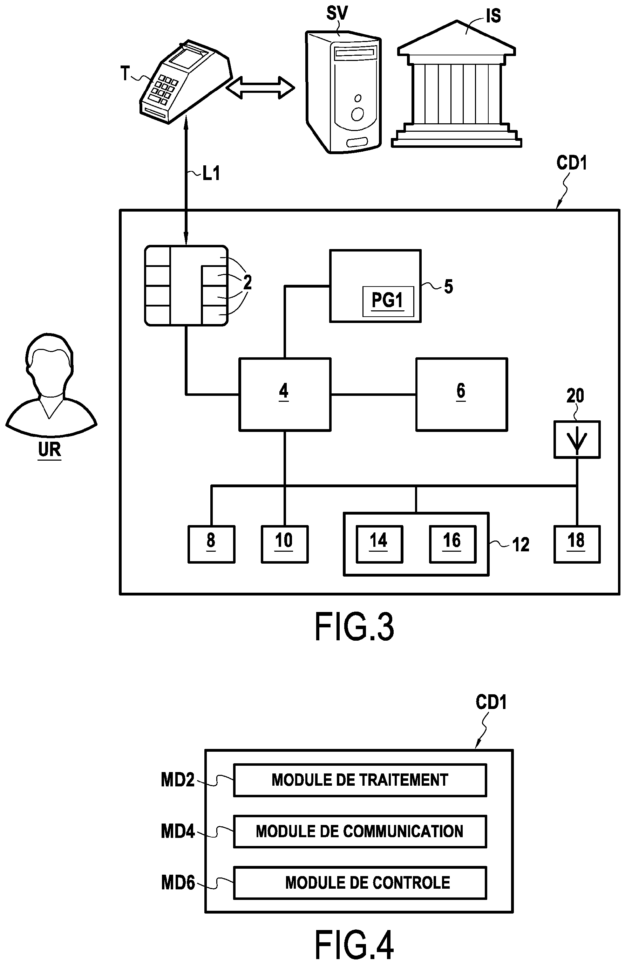

En référence à la **figure 3****,** une carte à puce CD1 est à présent décrite selon un mode de réalisation particulier de l'invention. Dans cet exemple, la carte à puce CD1 est une carte de paiement (ou carte bancaire) configurée pour traiter des transactions de paiement selon le protocole EMV. Comme déjà indiqué, d'autres types de protocoles et d'autres types de transaction sont toutefois possibles dans le cadre de l'invention.

La carte à puce CD1 est configurée pour coopérer avec un terminal externe T pour réaliser des transactions EMV. Le terminal externe T peut faire l'interface entre la carte à puce CD1 et un serveur distant SV géré par l'émetteur IS de la carte à puce CD1.

Dans cet exemple, la carte à puce CD1 comprend des contacts externes 2 conformes à la norme ISO 7816 pour coopérer par contact avec le terminal externe T. On suppose ici que la carte à puce CD1 peut aussi communiquer avec le terminal T en mode sans contact, en utilisant une antenne RF 20 qui est éventuellement aussi embarquée dans la carte à puce CD1, bien que cela ne soit pas obligatoire. L'invention s'appliquer aussi bien aux cartes à puce configurées pour fonctionner uniquement par contact, aux cartes à puce configurées pour fonctionner uniquement en mode sans contact et aux cartes à puce configurées pour fonctionner en mode par contact et en mode sans contact (cartes à puce à double interfaces de communication).

La carte à puce CD1 comprend en outre un premier processeur 4, une mémoire non-volatile 5, un deuxième processeur 6, une batterie 8 rechargeable, et éventuellement au moins un composant additionnel tel qu'un capteur 10 (un capteur biométrique par exemple) et/ou une interface utilisateur 12. Dans cet exemple, l'interface utilisateur comprend par exemple au moins une diode électroluminescente (LED) 14 et/ou un écran 16, de type papier électronique (ou « *e-paper* ») par exemple. D'autres configurations sont toutefois possibles.

La nature et le nombre de ces composants additionnels peut varier selon le cas. Chacun de ces composants additionnels peut être alimenté électriquement par la batterie 8. Eventuellement, la carte à puce CD1 peut comprendre également une pile (non rechargeable) 18 configurée pour recharger la batterie et/ou alimenter les composants additionnels en tant que source d'alimentation alternative.

Le premier processeur 4 contrôle les autres composants internes de la carte à puce CD1 en utilisant notamment sa mémoire non-volatile 5 et une mémoire vive (non représentée).

La mémoire 5 est une mémoire non volatile réinscriptible ou une mémoire morte (ROM), cette mémoire constituant un support d'enregistrement (ou support d'informations) conforme à un mode de réalisation particulier, lisible par la carte à puce CD1, et sur lequel est enregistré un programme d'ordinateur PG1 conforme à un mode de réalisation particulier. Ce programme d'ordinateur PG1 comporte des instructions pour l'exécution des étapes d'un procédé de contrôle selon un mode de réalisation particulier. Des exemples de mise en oeuvre de ce procédé sont décrits plus en détail ultérieurement en référence aux figures.

Le deuxième processeur 6 est dans cet exemple un processeur EMV configuré pour traiter des transactions selon le protocole EMV.

La batterie interne 8 (dite aussi « batterie d'accumulateurs ») comporte de façon bien connue une pluralité d'accumulateurs électriques (ou cellules) connectés entre eux de façon à former un générateur électrique de tension.

Divers types de batterie peuvent être envisagés dans le cadre de l'invention, dans la mesure où cette batterie peut être suffisamment compacte pour être embarquée dans une carte à puce. La batterie 8 peut notamment être selon l'un quelconque des types suivants : Lithium-ion, Lithium-Polymère, super-condensateur...

Au moins un supercondensateur (ou super-capacité) peut en outre être embarquée dans la carte à puce CD1 pour collecter l'alimentation électrique délivrée lors d'une recharge et la transmettre ultérieurement de façon progressive à la batterie 8. La carte à puce CD1 peut ainsi mettre en oeuvre un mécanisme faisant intervenir un super-condensateur pour récupérer l'énergie du terminal externe T sur une courtes durée avant, l'énergie collectée étant utilisée ultérieurement pour recharger la batterie. Dans ce cas, le procédé de l'invention permet de recharger le supercondensateur embarqué à un moment opportun lors d'une transaction, en vue d'utiliser ultérieurement ce supercondensateur pour recharger la batterie 8. On peut également considérer que la carte à puce CD1 comprend dans ce cas un système de batterie comprenant la batterie 8 et le supercondensateur, ce système de batterie étant rechargeable selon le principe de l'invention.

La carte à puce peut être configurée pour utiliser l'antenne RF 20 (si celle-ci est présente dans la carte à puce) pour coopérer en mode sans contact avec le terminal T. L'antenne RF 20 peut être configurée pour collecter par induction de l'énergie électrique pour alimenter électriquement la batterie 8. Comme expliqué par la suite, l'antenne RF 20 peut ainsi être utilisée pour recharger au moins en partie la batterie 8 à partir du terminal T.

On comprendra que certains éléments généralement présents dans une carte à puce ont été volontairement omis car ils ne sont pas nécessaires à la compréhension de la présente invention.

A noter également que la carte à puce CD1 représentée en **figure 3** ne constitue qu'un exemple de réalisation, d'autres mises en oeuvre étant possibles dans le cadre de l'invention. L'homme du métier comprend en particulier que certains éléments de la carte à puce CD1 ne sont décrits ici que pour faciliter la compréhension de l'invention, ces éléments n'étant pas nécessaires pour mettre en oeuvre l'invention.

Le premier processeur 4 piloté par le programme d'ordinateur PG1, met ici en œuvre un certain nombre de modules représentés en **figure 4****,** à savoir : un module de traitement MD2, un module de communication MD4 et un module de contrôle MD6.

Le module de traitement MD2 est configuré pour traiter une transaction (de type EMV dans cet exemple) au cours de laquelle la carte à puce CD1 communique avec le terminal externe T avec lequel la carte à puce est couplée. Dans l'exemple considéré ici, le module de traitement 4 est mis en oeuvre à la fois par le premier processeur 4 et par le deuxième processeur 6.

Le module de communication MD4 est configuré pour recevoir, au cours du traitement d'une transaction par le module de traitement MD2, une commande de transaction prédéterminée provenant du terminal externe T. La réception de cette commande de transaction prédéterminée indique à la carte à puce CD1 le démarrage d'une plage de temps, dans la transaction, qui est particulièrement adaptée pour procéder à la recharge électrique de la batterie 8.

Dans un exemple particulier, le module de communication MD4 est configuré pour détecter que cette commande de transaction prédéterminée est telle qu'elle requière un temps de traitement, par la carte à puce CD1, qui est suffisamment long pour permettre une recharge de la batterie (par le terminal externe T) jusqu'à atteindre au moins un premier niveau de charge seuil prédéterminé (noté ci-après TH1). Ce temps de traitement peut être inhérent aux spécifications du standard EMV et/ou à la configuration de la carte à puce CD1.

Comme indiqué ci-après, le premier niveau de charge seuil prédéterminé est choisi suffisamment grand pour éviter les phénomènes de micro-recharge décrits précédemment qui sont néfastes pour les performances et la durée de vie de la batterie. Selon un mode de réalisation particulier, ce premier niveau de charge seuil prédéterminé correspond à 50 %, voire à 55 % ou 60 %, de la capacité de charge maximale (capacité de charge nominale) de la batterie.

Le module de contrôle MD6 est configuré, en réponse à ladite commande de transaction prédéterminée reçue par le module de communication MD4, pour déclencher la recharge de la batterie 8 en utilisant une alimentation électrique délivrée par le terminal externe T. La recharge peut ainsi être réalisée jusqu'à atteindre au moins le premier niveau de charge seuil prédéterminé.

Comme indiqué par la suite, la commande de transaction prédéterminée mentionnée ci-dessus peut être choisie de façon appropriée par l'homme du métier pour déclencher la recharge de la batterie 8 à un stade de la transaction EMV en cours offrant des conditions adéquates en termes notamment de stabilité de l'alimentation électrique et de durée pendant laquelle l'alimentation électrique peut être maintenue sans interruption. Il existe un risque que la transaction en cours prenne fin de façon précoce, en raison notamment d'un problème survenant lors de la transaction ou parce que l'utilisateur décide d'interrompre inopinément la transaction (en découplant par exemple la carte à puce du terminal), ceci causant par la même occasion la fin de la recharge. Ce risque peut être limité en choisissant, pour effectuer la recharge, un stade de la transaction où il est peu probable que la transaction prenne fin. Le processus de recharge peut également être amélioré en choisissant comme période de recharge, un passage de la transaction garantissant la stabilité de l'alimentation électrique délivrée par le terminal externe T.

La configuration et le fonctionnement des modules MD2-MD6 de la carte à puce CD1 apparaîtront plus précisément dans les exemples de réalisation décrits ci-après en référence aux figures. On comprend que les modules MD2-M6 tels que représentés en **figure 4** ne représentent qu'un exemple de mise en oeuvre non limitatif de l'invention.

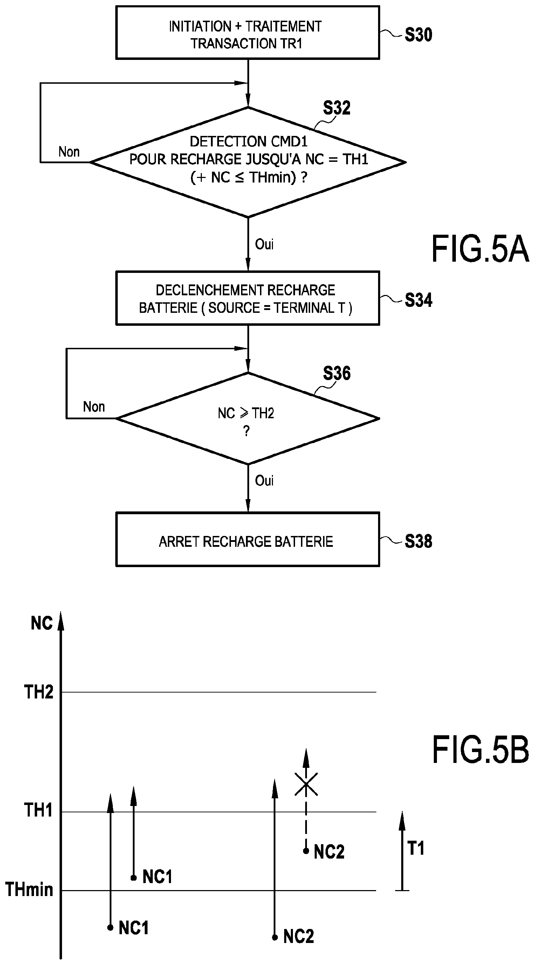

Un mode de réalisation particulier de l'invention est à présent décrit en référence aux **figures 5A et 5B****.** Plus précisément, la carte à puce CD1 décrite précédemment en référence aux **figures 3-4** met en oeuvre, en coopération avec le terminal T, un procédé de contrôle en exécutant le programme d'ordinateur PG1.

On suppose que l'utilisateur UR **(****figure 3****)** initie une transaction EMV en faisant coopérer par contact la carte à puce CD1 avec le terminal externe T. Pour ce faire, l'utilisateur UR insère la carte à puce CD1 dans le terminal T prenant ici la forme d'un terminal de paiement.

Au cours d'une étape S30, la carte à puce CD1 détecte l'initiation d'une transaction TR1 de type EMV. La carte à puce CD1 peut, par exemple, détecter l'initiation de la transaction TR1 sur réception du message de transaction RST conforme au standard EMV (comme déjà décrit en référence à la **figure 2****,** étape E2), en provenance du terminal T.

La carte à puce CD1 traite (S30) ensuite la transaction TR1 selon le protocole EMV. A cet effet, la carte à puce CD1 est couplée avec le terminal externe T. Dans cet exemple, ce couplage se traduit par la mise en contact des contacts externes 2 de la carte à puce CD1 avec le terminal externe T. Ce couplage est représenté par la référence L1 en **figure 3****.**

Au cours du traitement de la transaction TR1, la carte à puce CD1 communique (S30) par contact avec le terminal T avec lequel elle est couplée. Selon un autre exemple, il est également possible de faire communiquer la carte à puce CD1 en sans contact avec le terminal T.

Pendant le traitement (S30) de la transaction TR1, la carte à puce CD1 vérifie (S32) si elle détecte une commande de transaction prédéterminée CMD1 en provenance du terminal externe.

La commande de transaction CMD1 est prédéfinie de sorte qu'elle indique à la carte à puce CD1 le début d'une période de temps, pendant le traitement de la transaction EMV TR1, au cours de laquelle il est opportun de réaliser la recharge de la batterie 8.

Dans cet exemple, la commande de transaction prédéterminée CMD1 requiert un temps de traitement suffisamment long pour permettre une recharge de la batterie jusqu'à au moins un premier niveau de charge seuil prédéterminé TH1. Comme indiqué par la suite, la période pendant laquelle est réalisé ce traitement dans la transaction offre des conditions propices de stabilité de l'alimentation électrique délivrée par le terminal T.

Le niveau de charge seuil prédéterminé TH1 correspondant par exemple à au moins 50% de la capacité de charge maximale de la batterie. TH1 est par exemple égale à 50 %, voire 55 % ou 60 %, de la capacité de charge maximale de la batterie 8. Ce niveau de charge TH1 est choisi de sorte à ce que la recharge puisse être déclenché sur une période relativement courte dans le cadre du traitement d'une transaction en cours, tout en évitant des phases de recharge trop courtes (micro-recharges), néfastes pour les performances et la durée de vie de la batterie 8.

En réponse à la commande de transaction prédéterminée CMD1 reçue (S32) en provenance du terminal T, la carte à puce CD1 déclenche (S34) la recharge électrique de la batterie 8 en utilisant une alimentation électrique délivrée par le terminal externe T. La carte à puce est ainsi capable de réaliser la recharge (S34) de la batterie, à partir du terminal externe, au moment le plus opportun de la transaction TR1.

Selon l'exemple décrit ici, la commande de transaction prédéterminée CMD1 n'est pas le message RST conforme au standard EMV, la commande CMD1 étant reçue après le message RST. Le déclenchement de la recharge de la batterie 8 est ainsi différé par rapport au début de la transaction EMV, afin d'attendre une période du traitement plus propice offrant des conditions de stabilité satisfaisantes concernant l'alimentation électrique fournie par le terminal externe.

La **figure 5B** illustre par exemple un premier cas où la carte à puce CD1 détecte en 532 que la commande CMD1 est reçu et que son temps de traitement est suffisamment long pour recharger la batterie depuis son niveau de charge courant, noté NC1, jusqu'à au moins le niveau de charge seuil prédéterminé TH1. La recharge peut se poursuivre tant que la carte à puce CD1 n'est pas découplée du terminal T, jusqu'à atteindre le cas échéant le niveau TH2 comme décrit ci-après.

Selon un exemple particulier, lorsque qu'une commande de transaction CMD1 est reçue en S32 **(****figure 5A****)**, la carte à puce CD1 détermine, à partir du niveau de charge NC courant de la batterie 8, si le temps de traitement de cette transaction est suffisant pour permettre une recharge de la batterie 8 au moins jusqu'au niveau de charge seuil prédéterminé TH1. Le procédé se poursuit à l'étape S34 uniquement dans l'affirmative. Autrement dit, en réponse à la détection qu'une commande de transaction CMD1 reçue requiert un temps de traitement, par la carte à puce CD1, suffisant pour permettre une recharge de la batterie 8 au moins jusqu'au niveau de charge seuil prédéterminé TH1, la carte à puce CD1 procède à l'étape S34 de déclenchement telle que déjà décrite. En effet, le temps de recharge pour atteindre au moins ce niveau TH1 peut varier en fonction du niveau de charge courant de la batterie. Une période donnée d'une transaction en cours peut donc être propice pour initier la recharge de la batterie seulement lorsque le niveau de charge NC courant se trouve dans une certain plage par exemple.

Selon un exemple particulier, la carte à puce CD1 vérifie également en S32 **(****figure 5A****)** si le niveau de charge NC est inférieur à un niveau de charge minimum prédéterminé THmin. La carte à puce CD1 déclenche alors en 534 **(****figure 5A****)** la recharge électrique de la batterie 8 seulement si les deux conditions suivantes sont remplies :
a) réception d'une commande de transaction CMD1 prédéterminée, cette commande requérant un temps de traitement par la carte à puce CD1 qui est suffisamment long pour permettre une recharge de la batterie 8 jusqu'à au moins le premier niveau de charge seuil prédéterminé TH1 ; et
b) le niveau de charge courant NC est inférieur ou égal au niveau de charge minimum prédéterminé THmin (THmin ≤ TH1).

Autrement dit, selon cet exemple particulier, THmin définit une valeur seuil du niveau de charge NC courant au-dessus de laquelle la carte à puce CD1 ne déclenche pas la recharge de la batterie 8. Cela permet à la carte à puce CD1 d'éviter de déclencher une recharge de la batterie 8 inutilement si son niveau de charge NC courant est trop proche de sa capacité de charge maximale, de façon à réduire encore d'avantage les risques de micro-recharge et préserver au maximum la durée de vie de la batterie.

Selon un exemple particulier, la valeur THmin est fixée de sorte que la différence (TH1 - Thmin) représente au moins 10%, voire 15% ou 20 %, de la capacité de charge maximale de la batterie.

La **figure 5B** illustre par exemple un deuxième cas où la carte à puce CD1 reçoit la commande CMD1 et déclenche la recharge de la batterie 8 sur détection que le niveau de charge courant, noté NC2, de la batterie 8 est inférieur ou égal au niveau de charge minimum prédéterminé THmin et que le temps de traitement de la commande CMD1 est suffisamment long pour permettre la recharge de la batterie 8 depuis le niveau de charge courant NC2 jusqu'à au moins le niveau de charge seuil TH1.

De manière générale, pour déterminer en S32 **(****figure 5A****)** si une commande reçue requiert un traitement par la carte à puce CD1 suffisamment long pour recharger la batterie 8 jusqu'au moins le niveau de charge TH1, la carte à puce CD1 peut par exemple déterminer à partir du niveau de charge NC courant un temps de recharge nécessaire pour atteindre au moins le niveau de charge TH1 en utilisant l'alimentation électrique du terminal T et peut ensuite comparer ce temps de recharge estimé à un temps de traitement de référence nécessaire pour le traitement de la commande reçue. La carte à puce CD1 ne déclenche (S34, **figure 5A****)** alors la recharge de la batterie 8 que si le temps de traitement de référence est supérieur ou égal au temps de recharge estimé.

En référence à la **figure 5B****,** on note par exemple T1 le temps nécessaire pour recharger la batterie 8 depuis le niveau de charge minimum prédéterminé THmin jusqu'au premier niveau de charge prédéterminée TH1. Selon un exemple particulier, T1 correspond ainsi au temps de recharge minimum qui est nécessaire pour effectuer une recharge en utilisant l'alimentation électrique délivrée par le terminal T (dans le cas où la condition b) mentionnée ci-dessus est appliquée). La carte à puce CD1 peut alors vérifier en 532 **(****figure 5A****)** si le temps de traitement de référence nécessaire pour traiter la commande reçue excède le temps T1. A partir de ce temps T1, on peut ainsi prédéfinir les commandes lors d'une transaction qui sont susceptibles de déclencher une recharge de la batterie 8.

Par ailleurs, selon un exemple particulier, l'alimentation électrique du terminal externe T **(****figure 3****)** est délivrée par contact via au moins un contact externe 8 connecté au terminal T, par exemple via le contact externe 8 correspondant au contact Vcc au sens de la norme ISO 7816. Il est ainsi possible de fournir de façon rapide et efficace à la batterie embarquée 8 une alimentation électrique stable, ce qui permet d'optimiser les performances de la batterie 8 et de réduire le temps de recharge.

Selon un mode de réalisation particulier, au cours de la recharge de la batterie 8, la carte à puce CD1 surveille le niveau de charge de la batterie et vérifie (S36) en particulier si un niveau de charge suffisant est atteint. Dans l'exemple considéré ici, la carte à puce CD1 vérifie lors de l'étape S36 si la batterie 8 a atteint un deuxième niveau de charge seuil prédéterminé TH2 (avec TH2 ≥ TH1). Selon un exemple particulier, TH1 = TH2. Selon un autre exemple, TH2 > TH1.

Sur détection (536) que ce deuxième niveau de charge TH2 est atteint, la carte à puce CD1 cause l'arrêt (S38) de la recharge de la batterie 8 en interrompant l'alimentation délivrée par le terminal T. La carte à puce CD1 peut ainsi être configurée pour que la batterie 8 se recharge à un niveau souhaité TH2 qui va au-delà du niveau de charge minimum requis TH1 **(****figures 5A-5B****).** Cette valeur TH2 peut par exemple correspondre au niveau de charge maximale (ou capacité de charge maximale) de la batterie ou à un niveau inférieur à celui-ci afin d'éviter que le niveau de charge maximale soit atteint, ce qui pourrait réduire la durée de vie de la batterie. La recharge de la batterie 8 peut ainsi être arrêtée après avoir réalisé un cycle de recharge plein ou presque plein. En arrêtant la recharge une fois le niveau de charge seuil TH2 atteint, on évite de stresser de façon trop importante la batterie 8, ce qui permet de prolonger encore d'avantage sa durée de vie.

Selon un exemple particulier, le deuxième niveau de charge seuil TH2 correspond à 80 %, voire 85 % ou 90 %, de la capacité de charge maximale de la batterie 8.

Comme déjà indiqué, l'invention permet de mettre en oeuvre une recharge électrique intelligente de la batterie 8 en déclenchant la recharge à un moment approprié dans la transaction en cours TR1, de façon à améliorer les performances de la batterie 8. En déclenchant la recharge sur détection de la commande de transaction prédéfinie CMD1, il est possible de choisir une période de temps adéquate dans le déroulement de la transaction TR1 pour effectuer la recharge, ce qui permet notamment de délivrer une alimentation stable pendant un temps suffisant à la batterie 8 jusqu'à ce qu'au moins un premier niveau de charge désiré soit atteint.

L'alimentation électrique délivrée par le terminal externe T peut en effet être perturbée, voire être interrompue, alors que la batterie 8 est toujours en cours de rechargement. La transaction TR1 peut par exemple s'arrêter de façon précoce en raison d'un problème survenant lors de la transaction (problème de couplage, refus de la carte à puce de traiter la transaction,...) ou en raison d'un arrêt inopiné de la transaction par l'utilisateur qui découple la carte à puce CD1 du terminal T alors que la transaction n'est pas terminée.

L'instabilité de l'alimentation électrique ou encore l'interruption inopinée du processus de recharge au cours d'une phase de recharge peuvent causer le vieillissement accéléré de la batterie et diminuer ses performances. En contrôlant la carte à puce pour qu'elle assure la recharge de la batterie pendant une période adéquate du traitement EMV, on peut avantageusement augmenter la durée de vie et les performances de la batterie.

Conformément à l'invention, la carte à puce CD1 vérifie si une commande de transaction prédéterminée CMD1 est reçue, cette commande requérant un temps de traitement, par la carte à puce, suffisamment long pour permettre une recharge de la batterie 8 à au moins un premier niveau de charge seuil prédéterminé TH1. Cela suppose que la période pendant laquelle la carte à puce CD1 traite cette commande CMD1 offre des conditions de stabilité d'alimentation électrique qui sont propices pour recharger la batterie au moins jusqu'au niveau de charge TH1. Pour cela, la commande de traitement CMD1 doit être choisie en conséquence. Le traitement de cette commande CMD1 rend par exemple peu probable un découplage précoce de la carte à puce alors que la phase de recharge de la batterie est toujours en cours, limitant ainsi les risques d'une interruption de recharge déjà décrits ci-avant. Cette commande peut également être choisie en raison du risque faible que, pendant le traitement de la commande, des perturbations soient susceptibles d'affecter l'alimentation électrique délivrée par le terminal T pour recharger la batterie 8.

La durée de vie de la batterie peut être encore prolongée en s'assurant qu'une recharge ne soit déclenchée que si son niveau de charge courant est inférieur à un niveau de charge minimum prédéterminé, comme décrit précédemment.

Selon un mode de réalisation particulier, on peut également augmenter la durée de vie de la batterie en se servant d'un super-condensateur embarqué dans la carte à puce pour cumuler l'énergie de plusieurs transactions avant de procéder à une recharge de la batterie, par exemple une fois que l'énergie cumulée atteint un niveau seuil prédéterminé. La recharge de la batterie se produit par exemple hors transaction, c'est-à-dire alors que la carte à puce n'est pas couplée avec un terminal externe. Dans ce mode particulier, c'est donc le super-condensateur qui est rechargé au moment opportun pendant le traitement de la transaction en coopération avec le terminal externe. Selon un exemple particulier, la carte à puce comprend un système de batterie comprenant la batterie rechargeable ainsi que ledit supercondensateur, ce dernier étant configuré pour cumuler de l'énergie lors du processus de recharge pendant des transactions, conformément au principe de l'invention.

Il revient à l'homme du métier de choisir au mieux la commande de transaction CMD1 marquant l'activation de la recharge de la batterie 8, en fonction notamment des spécificités de la batterie et de la carte à puce, et également en fonction du protocole de transaction implémenté. Cette commande de transaction CMD1 doit requérir un temps de traitement, par la carte à puce CD1, qui est suffisamment long pour permettre une recharge de la batterie à au moins un premier niveau de charge seuil prédéterminé. Idéalement, ce temps de traitement est peut sujet aux fluctuations de l'alimentation électrique délivré par le terminal externe. La recharge peut en outre être déclenchée (S32-S34, **figure 5A****)** pendant une période où aucun composant (processeur ou autre) de la carte à puce CD1, autre que la batterie 8, n'a une consommation électrique qui excède un niveau prédéterminé, afin d'assurer une alimentation électrique stable à la batterie en provenance du terminal externe.

Dans l'exemple de réalisation décrit ci-avant, la commande de transaction prédéterminée CM1 peut être l'une parmi les commandes APDU suivantes au sens du standard EMV : GPO, GAC, et VERIFICATION DE PIN (comme déjà décrit précédemment en référence aux étapes E12, E24 et E30 de la **figue 2).**

Les commandes GPO, GAC et VERIFICATION DE PIN imposent chacune un traitement relativement long de la carte à puce CD1, période pendant laquelle il n'y a pas ou peu d'interaction avec le terminal T. Pendant le traitement de ces commandes de transaction prédéterminées, il a été déterminé qu'un minimum de perturbations est susceptible d'affecter négativement la recharge de la batterie 8 par le terminal externe T. Ainsi, chacune des commandes GPO, GAC et VERIFICATION DE PIN requiert un temps de traitement, par la carte à puce CD1, qui est conforme à la norme EMV et qui est en particulier suffisamment long pour permettre une recharge de la batterie à au moins le premier niveau de charge seuil TH1, à partir de l'alimentation électrique du terminal externe T.

Par exemple, réaliser la recharge de la batterie 8 pendant la période au cours de laquelle l'utilisateur UR saisit son code PIN sur le terminal externe T est avantageux en ce que le risque est faible que l'utilisateur UR mette fin de façon précoce à la transaction TR1 en découplant par exemple la carte à puce CD1 et le terminal T. Aussi, il est avantageux de configurer la carte à puce CD1 de sorte à ce qu'elle cause la recharge de la batterie en réponse à la commande de transaction GPO provenant du terminal T.

Pour des raisons analogues, il est avantageux de causer la recharge de la batterie 8 en réponse à la détection, par la carte à puce CD1, de la commande de transaction GPO ou GAC.

Le risque que le traitement de la transaction TR1 s'arrête de façon précoce est par exemple relativement élevé lors de l'établissement du couplage entre la carte à puce CD1 et le terminal T1, c'est-à-dire au début du protocole EMV (échange du RST/ATR, étapes E2-E4, **figure 2****)** entre carte à puce CD1 et terminal T1. Grâce à l'invention, la recharge de la batterie n'est pas déclenchée instantanément dès le couplage réalisé mais ultérieurement lorsque les conditions pour la recharge sont plus favorables.

L'invention est également avantageuse en ce qu'il n'est pas nécessaire de modifier les protocoles de transaction actuels (EMV notamment). La recharge de la batterie 8 peut être réalisée de façon transparente pour l'utilisateur UR, c'est-à-dire sans que celui-ci ne s'en rendre compte ou change ses habitudes puisque le processus de recharge est intégré de façon intelligente dans le protocole EMV, sans perturber ou ralentir de façon importante ce dernier.

Dans l'exemple de réalisation décrit ci-dessus en référence à la **figure 4****,** la transaction TR1 est traitée selon le protocole EMV, bien que d'autres implémentations soient possibles. Selon un exemple particulier, la transaction TR1 est une transaction de paiement de type EMV, MONEO (application portemonnaie) ou GELDKARTE (application portemonnaie).

Selon un exemple particulier, la transaction TR1 est réalisée selon le protocole EMV défini par la spécification « *EMV Integrated Circuit Card Specifications for Payment Systems* » (Book 3, Application Spécification, Version 4.3 datant de novembre 2011).

Selon un exemple particulier, la transaction TR1 est réalisée selon le protocole MONEO (portefeuille électronique) défini par la spécification « *Electronic PURSE* - *MON€O - Card Specification* - *PME* - *DSI9A* - *v2.5.2 -22*/*01*/*2002* - *DSI9A Version 2.5.2* »*.*

Dans le cas où la transaction TR1 est une transaction de type MONEO, la commande de transaction prédéterminée CMD1 peut être l'une parmi les commandes APDU suivantes : DEBIT (Instruction 0x34), CONTRE-PASSATION DE DEBIT pour « DEBIT REVERSAI » (Instruction 0x36) et VERIFICATION DE PIN pour « VERIFY PIN » (Instruction 0x20).

Selon un exemple particulier, la transaction TR1 est réalisée selon le protocole GELDKARTE défini par la spécification « *GeldKarte Applikation elektronische Geldbörse für SECCOS 6* » (Version 1.3 - 21/03/2011).

Dans le cas où la transaction TR1 est une transaction de type GELDKARTE, la commande de transaction prédéterminée CMD1 peut être l'une des commandes APDU suivantes : DEBIT (Instruction 0x34) et REMBOURSEMENT (Instruction 0x36).

Dans l'exemple de réalisation décrit ci-avant en référence à la **figure 4****,** l'alimentation électrique du terminal externe T est délivrée par contact, par exemple via le contact externe Vcc au sens de la norme ISO 7816. Selon un autre exemple, il est possible de configurer la carte à puce CD1 et le terminal externe T pour que ce dernier délivre à la batterie 8 une alimentation électrique en sans contact, par exemple par induction électromagnétique, en utilisant l'antenne RF 20 de la carte à puce CD1. Selon un exemple particulier, la carte à puce CD1 déclenche la recharge de la batterie 8 en utilisant l'alimentation électrique délivrée par le terminal externe T, à la fois par contact (par exemple via le contact externe 8 Vcc) et en sans contact (via l'antenne RF 20). Il est ainsi possible d'accélérer le processus de recharge de la batterie 8 et de s'assurer que le nombre n désiré de cycles de recharge est atteint sans interruption inopinée de la recharge. Cette variante est en particulière avantageuse dans la cas des terminaux T (terminaux de paiement ou autre) qui sont configurés pour émettre des signaux RF même lorsque les communications avec la carte à puce CD1 sont réalisée par contact.

Selon un autre exemple de réalisation, la carte à puce DV1 coopère en mode sans contact avec le terminal T pour traiter la transaction TR1.

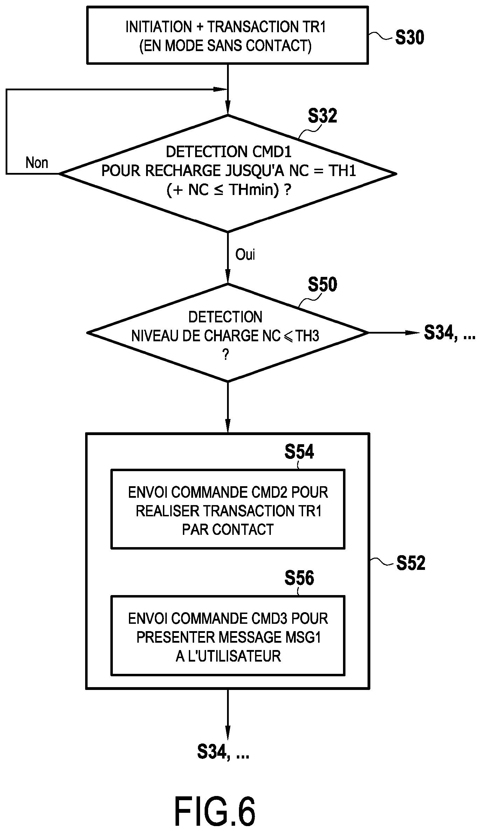

La **figure 6** représente un mode de réalisation de l'invention dans lequel on suppose que la carte à puce CD1 coopère en mode sans contact avec le terminal externe T pour réaliser la transaction TR1. Dans cet exemple, la communication de la carte à puce CD1 avec le terminal T se fait donc par couplage électromagnétique.

Tout d'abord, la carte à puce CD1 réalise les étapes S30 et S32 comme déjà décrit précédemment en référence notamment aux **figures 3-4****.**

Une fois la commande de transaction prédéterminée CMD1 détectée (S32), la carte à puce CD1 détermine (S50) si le niveau courant de charge - noté NC - de la batterie 8 est inférieur ou égal à une troisième valeur seuil TH3. Dans la négative, la carte à puce CD1 reprend le procédé de contrôle à l'étape S34 comme déjà décrit précédemment.

Si, en revanche, la carte à puce CD1 détecte (S50) que le niveau courant de charge NC de la batterie 8 est tel que : NC ≤ TH3, alors le procédé se poursuit à l'étape S52 au cours de laquelle la carte à puce CD1 réalise au moins une action prédéterminée pour forcer le traitement par contact de la transaction TR1.

Ce troisième niveau de charge seuil TH3 peut être choisi de sorte que TH3 ≤ TH1.

Plus précisément, au cours de l'étape S52 **(****figure 6****),** la carte à puce CD1 peut réaliser au moins l'une des actions suivantes :
- action S54 au cours de laquelle la carte à puce CD1 transmet au terminal T une commande CMD2 requérant le traitement par contact de la transaction TR1 ;
- action S56 au cours de laquelle la carte à puce CD1 transmet une commande CMD3 à son interface utilisateur 12 pour causer la présentation à l'utilisateur UR d'une notification indiquant que la transaction courante (ou une transaction ultérieure) doit être traitée par contact.

A noter que, selon une variante, la carte à puce CD1 peut réaliser l'étape S50 de détection avant l'étape S32.

L'invention permet ainsi avantageusement de forcer le traitement par contact lorsque la batterie 8 nécessite une recharge, en particulier lorsque le niveau de charge courant est particulièrement bas, afin de pouvoir réaliser la recharge par contact à partir de l'alimentation électrique du terminal T. Bien qu'une recharge sans contact est dans certains cas possibles (cf. ci-après), une recharge par contact est généralement plus rapide et permet de limiter le temps de recharge, ce qui est important en particulier lorsque le niveau de charge courant est particulièrement bas.

Selon une variante, l'étape S50 n'est pas réalisée et la carte à puce CD1 réalise systématiquement l'étape S52 représentée en **figure 6****.**

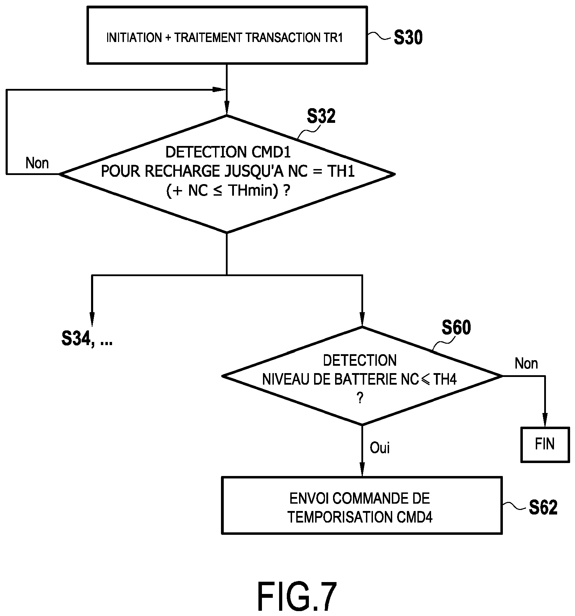

La **figure 7** représente un mode de réalisation de l'invention dans lequel la carte à puce CD1 réalise les étapes 530 et S32 comme déjà décrit précédemment, puis réalise les étapes S60 et 562 en parallèle du (ou avant le, ou après le) déclenchement S34 de la recharge de la batterie 8.

Plus précisément, sur détection (S32) que la commande de transaction prédéterminée CMD1 est reçue, la carte à puce CD1 détermine (S60) si le niveau de charge courant - noté NC - de la batterie 8 est inférieur ou égal à une quatrième valeur seuil TH4. Dans l'affirmative (NC ≤ TH4), la carte à puce CD1 procède à l'étape 562 au cours de laquelle elle envoie au terminal externe T une commande de temporisation CMD4 requérant que le terminal T prolonge artificiellement un temps de traitement nécessaire pour réaliser un traitement au cours de la transaction TR1, de façon à permettre la réalisation de la recharge de la batterie 8.

Cette commande de temporisation CMD4 peut notamment indiquer au terminal T l'étape de traitement (conforme au protocole EMV ou autre) au cours de laquelle le terminal T doit maximiser son temps de traitement.

L'invention permet ainsi de maximiser la période, lors du traitement de la transaction TR1, pendant laquelle la carte à puce CD1 est susceptible de causer la recharge (S36) de la batterie 8. On peut ainsi atteindre le niveau de charge seuil TH1 (voir au-delà, jusqu'à atteindre éventuellement le niveau de charge TH2) tout en limitant les risques que la recharge (S36) de la batterie soit interrompue avant d'avoir atteint le niveau de charge seuil TH1. Autrement dit, l'invention permet d'éviter toute coupure d'alimentation électrique délivrée par le terminal T qui pourrait affecter négativement la recharge de la batterie.

Le terminal T peut par exemple être configuré pour se réinitialiser et/ou mettre fin à la transaction s'il n'a pas de communication avec la carte à puce CD1 pendant une période d'inactivité prédéterminée, de 1 seconde par exemple, ce qui a pour conséquence de découpler la carte à puce et couper l'alimentation électrique délivrée par le terminal T. Pour éviter une telle coupure d'alimentation, la carte à puce CD1 peut requérir du temps supplémentaire pour traiter la commande de transaction CMD1, en envoyant une commande de temporisation CMD4.

La commande de temporisation CMD4 requière par exemple le prolongement d'un temps de traitement utilisé par le terminal externe T pour réaliser un traitement dans les limites autorisées par le standard EMV (ou autre).

L'ISO 7816 définit notamment « PROCEDURE BYTE : 0x60 » en protocole contact, ceci correspondant à un message que la carte doit envoyer régulièrement au terminal externe pour lui signaler qu'elle est toujours présente (toujours couplée) et qu'elle a besoin que le terminal lui alloue du temps supplémentaire pour terminer ses traitement lors de la transaction en cours. Cette commande « PROCEDURE BYTE : 0x60 » peut constituer un exemple de commande de temporisation au sens de l'invention. Par exemple, entre la réception d'une commande GAC et le renvoi de la réponse à cette commande GAC, la carte à puce peut être configurée pour envoyer plusieurs commandes « PROCEDURE BYTE : 0x60 » (en T0) pour que le terminal externe comprenne qu'il doit attendre la réponse à la commande GAC.

Le même principe peut être appliqué dans le cadre du protocole EMV sans contact : on peut ainsi utiliser la commande « WTX (WAITING TIME EXTENSION) », bien connue de l'homme du métier.

Le terminal T utilise ainsi le maximum de temps autorisée par la spécification du protocole EMV (ou autre) pour que le terminal réalise une étape de traitement de la transaction, afin d'allonger la durée de traitement disponible pour recharger la batterie dans des conditions optimales.

Selon une variante de réalisation, la carte à puce CD1 procède à l'étape S62 sans réaliser l'étape S60. Autrement dit, la carte à puce CD1 envoie systématiquement une commande de temporisation CMD4 quel que soit le niveau de charge de la batterie 8.

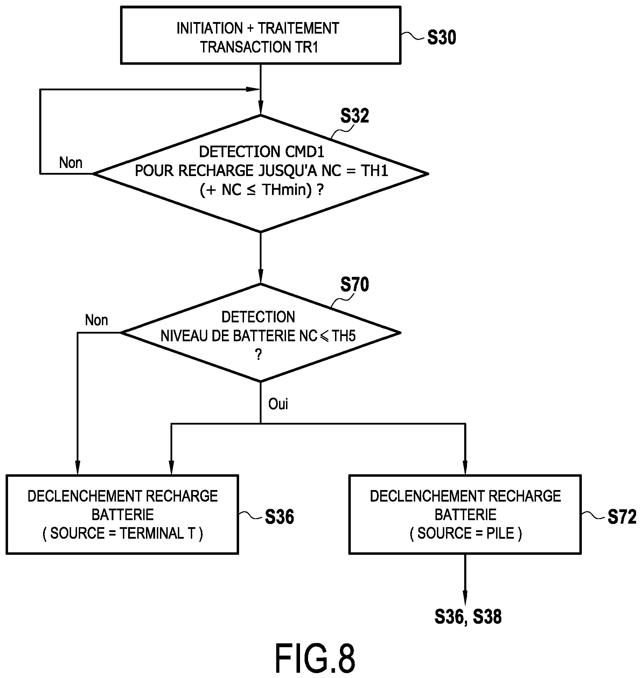

La **figure 8** représente un mode de réalisation de l'invention dans lequel la carte à puce CD1 réalise les étapes S30 et S32 comme déjà décrit précédemment, puis réalise l'étape S70. On suppose ici que la carte à puce CD1 comporte la pile 18 **(****figure** 3).

Plus précisément, sur détection (S32) que la commande de transaction prédéterminée CMD1 est reçue, la carte à puce CD1 détermine (S70) si le niveau de charge courant NC est inférieur ou égal à une cinquième valeur seuil TH5. Dans la négative (NC > TH5), la carte à puce CD1 poursuit le procédé de contrôle comme déjà décrit précédemment en déclenchant (S36) la recharge de la batterie 8 à partir de l'alimentation électrique délivré par le terminal T.

Dans le cas contraire (NC ≤ TH5), alors la carte à puce CD1 procède à l'étape S36 comme déjà décrit précédemment et parallèlement à l'étape S72. Plus précisément, dans le cas où la détection en S70 est positive (NC ≤ TH5), la carte à puce CD1 déclenche (S36) la recharge de la batterie 8 à partir de l'alimentation électrique délivrée par le terminal T (par contact par exemple), et parallèlement, déclenche (S72) aussi la recharge de la batterie 8 en utilisant l'alimentation électrique fournie par la pile interne 18.

Le niveau de charge seuil THS peut être tel que TH5 ≤ TH1.

La pile 18 est ainsi utilisée en tant que source d'alimentation secondaire pour recharger la batterie, en particulier quand celle-ci présente un niveau de charge très bas. En faisant intervenir la pile 18, il est possible de diminuer le temps de recharge de la batterie, et ainsi éviter de ralentir excessivement le traitement de la transaction TR1 en cours. Le procédé permet ainsi de recharger la batterie, même lorsqu'elle est presque ou totalement épuisée, tout en permettant au processus de recharge d'être transparent pour l'utilisateur.

Lors de l'étape S72, la pile 18 peut être activée pour suppléer (remplacer) ou complémenter l'alimentation électrique délivrée par le terminal T.

Selon une variante, la carte à puce CD1 déclenche (S72) systématiquement la recharge de la batterie 8 par la pile 18, en complément de l'alimentation électrique délivrée par le terminal T, quel que soit le niveau de charge courant NC de la batterie 8.

Selon une variante, lors de la recharge (S72) par la pile, sur détection que le niveau de charge courant NC de la batterie 8 augmente jusqu'à atteindre une quatrième valeur seuil, la carte à puce interrompt la recharge de la batterie 8 par la pile de sorte que la recharge de la batterie 8 se poursuive uniquement à partir de l'alimentation électrique délivrée par le terminal externe T.

L'invention permet ainsi de garantir que la batterie 8 est rechargée à un niveau de charge suffisant tout en préservant au maximum la pile 18 qui elle n'est pas rechargeable.

Un homme du métier comprendra que les modes de réalisation et variantes décrits ci-avant ne constituent que des exemples non limitatifs de mise en oeuvre de l'invention. En particulier, l'homme du métier pourra envisager une quelconque adaptation ou combinaison des modes de réalisation et variantes décrits ci-avant afin de répondre à un besoin bien particulier.

## Revendications

1. Procédé de contrôle mis en oeuvre par une carte à puce (CD1) comportant une batterie (8) rechargeable, le procédé comprenant :
- traitement (S30) d'une transaction (TR1) au cours de laquelle la carte à puce communique avec un terminal externe (T) avec lequel ladite carte à puce est couplée ; et
- réception (S32), au cours dudit traitement de la transaction, d'une commande de transaction (CMD1) prédéterminée en provenance du terminal externe ;
le procédé étant **caractérisé en ce qu'**il comprend en outre :
- détection (S32), à partir d'un niveau de charge courant de la batterie, que ladite commande de transaction prédéterminée requière un temps de traitement, par ladite carte à puce, suffisamment long pour permettre une recharge de la batterie à au moins un premier niveau de charge seuil prédéterminé (TH1) ; et
- en réponse à ladite détection (S32), déclenchement (S34) de la recharge de la batterie en utilisant une alimentation électrique délivrée par le terminal externe pour atteindre au moins le premier niveau de charge seuil prédéterminé.

2. Procédé selon la revendication 1, dans lequel le premier niveau de charge seuil prédéterminé correspondant à au moins 50% de la capacité de charge maximale de la batterie.

3. Procédé selon la revendication 1 ou 2, dans lequel la carte à puce (CD1) déclenche (S34) ladite recharge sur réception de ladite commande de transaction (CMD1), seulement si le niveau de charge (NC) courant de la batterie est inférieur ou égal à un niveau de charge minimum prédéterminé (THmin).

4. Procédé selon l'une quelconque des revendications 1 à 3, dans lequel la transaction (TR1) est une transaction de type EMV, ladite commande de transaction prédéterminée étant l'une parmi les commandes APDU suivantes au sens du standard EMV :
- GPO ;
- GAC ; et
- VERIFICATION DE PIN.

5. Procédé selon la revendication 3, dans lequel:
la transaction (TR1) est une transaction de type MONEO, ladite commande de transaction prédéterminée étant l'une parmi les commandes APDU suivantes : DEBIT, CONTRE-PASSATION DE DEBIT et VERIFICATION DE PIN ;
ou
la transaction (TR1) est une transaction de type GELDKARTE, ladite commande de transaction prédéterminée étant l'une parmi les commandes APDU suivantes : DEBIT et REMBOURSEMENT.

6. Procédé selon l'une quelconque des revendications 1 à 5, dans lequel le procédé comprend en outre :
- arrêt (S38) de la recharge de la batterie sur détection que le niveau de charge de la batterie a atteint un deuxième niveau de charge seuil prédéterminé (TH2), supérieur ou égal au premier niveau de charge seuil prédéterminé (TH1).

7. Procédé selon l'une quelconque des revendications 1 à 6, dans lequel l'alimentation électrique est reçue, depuis le terminal externe, par contact externe.

8. Procédé selon la revendication 7, dans lequel la carte à puce est de type ISO 7816, l'alimentation électrique étant reçue, depuis le terminal, par contact via le contact Vcc connectée au terminal externe.

9. Procédé selon la revendication 7 ou 8, dans lequel la carte à puce déclenche la recharge de la batterie, simultanément par contact et en sans contact, depuis le terminal externe.

10. Procédé selon l'une quelconque des revendications 1 à 9, dans lequel le procédé comprend en outre, préalablement audit déclenchement de la recharge de la batterie :
- sur détection (S50) que le niveau de charge de la batterie est inférieur à un troisième niveau de charge seuil (TH3), envoi (S54) au terminal externe d'une première commande (CMD2) requérant que la transaction soit traitée par contact.

11. Procédé selon la revendication 10, dans lequel le procédé comprend en outre, préalablement audit déclenchement de la recharge de la batterie :
- sur détection (S52) que le niveau de charge de la batterie est inférieur au troisième niveau de charge seuil (TH3), envoi (S56) d'une deuxième commande (CMD3) à une interface utilisateur de la carte à puce pour causer la présentation à un utilisateur d'une notification (MSG1) indiquant que la transaction doit être traitée par contact.

12. Procédé selon l'une quelconque des revendications 1 à 11, comprenant :
- envoi (S62) au terminal externe d'une commande de temporisation (CMD4) requérant que le terminal externe prolonge artificiellement un temps de traitement nécessaire pour réaliser un traitement au cours de ladite transaction, de façon à permettre la réalisation de ladite recharge de la batterie.

13. Procédé selon la revendication 12, dans lequel la transaction est de type EMV, la commande de temporisation requérant le prolongement d'un temps de traitement utilisé par ledit terminal externe pour réaliser un traitement dans les limites autorisées par le standard EMV.

14. Procédé selon l'une quelconque des revendications 1 à 13, dans lequel la carte à puce comprend une pile non rechargeable, le procédé comprenant en outre :
- sur détection (S70) que le niveau de charge de la batterie est inférieur à un quatrième niveau de charge seuil (TH4), déclenchement de la recharge de la batterie à partir de la pile pour suppléer ou complémenter l'alimentation électrique délivrée par le terminal externe.

15. Carte à puce (CD1) comprenant :
- une batterie (8) rechargeable ;
- un module de traitement (MD2) configuré pour traiter une transaction au cours de laquelle la carte à puce communique avec un terminal externe (T) avec lequel ladite carte à puce est couplée ;
la carte à puce étant **caractérisée en ce qu'**elle comprend en outre :
- un module de communication (MD4) configuré pour recevoir, au cours dudit traitement de la transaction, une commande de transaction prédéterminée en provenance du terminal externe et pour détecter, à partir d'un niveau de charge courant de la batterie, que ladite commande de transaction prédéterminée requiert un temps de traitement, par ladite carte à puce, suffisamment long pour permettre une recharge de la batterie à au moins un premier niveau de charge seuil prédéterminé ; et
- un module de contrôle (MD6) configuré, en réponse à ladite détection que la commande de transaction prédéterminée requiert un temps de traitement suffisamment long, pour déclencher la recharge de la batterie en utilisant une alimentation électrique délivrée par le terminal externe pour atteindre au moins le premier niveau de charge seuil prédéterminé.

## Patentansprüche

1. Steuerverfahren, durchgeführt von einer einen wiederaufladbaren Akku (8) aufweisenden Chipkarte (CD1), wobei das Verfahren enthält:
- Verarbeitung (S30) einer Transaktion (TR1), während der die Chipkarte mit einem externen Endgerät (T) kommuniziert, mit dem die Chipkarte gekoppelt ist; und
- Empfang (S32), während der Verarbeitung der Transaktion, eines vom externen Endgerät kommenden vorbestimmten Transaktionsbefehls (CMD1);
wobei das Verfahren **dadurch gekennzeichnet ist, dass** es außerdem enthält:
- Feststellung (S32), ausgehend von einem aktuellen Ladezustand des Akkus, dass der vorbestimmte Transaktionsbefehl eine Verarbeitungszeit durch die Chipkarte erfordert, die ausreichend lang ist, um eine Wiederaufladung des Akkus auf mindestens einen ersten vorbestimmten Schwellen-Ladezustand (TH1) zu erlauben; und
- als Antwort auf die Feststellung (S32), Auslösen (S34) der Wiederaufladung des Akkus unter Verwendung einer vom externen Endgerät gelieferten Stromversorgung, um mindestens den ersten vorbestimmten Schwellen-Ladezustand zu erreichen.

2. Verfahren nach Anspruch 1, wobei der erste vorbestimmte Schwellen-Ladezustand mindestens 50% der maximalen Ladekapazität des Akkus entspricht.

3. Verfahren nach Anspruch 1 oder 2, wobei die Chipkarte (CD1) die Wiederaufladung bei Empfang des Transaktionsbefehls (CMD1) nur auslöst (S34), wenn der aktuelle Ladezustand (NC) des Akkus niedriger als ein oder gleich einem vorbestimmten minimalen Ladezustand (THmin) ist.

4. Verfahren nach einem der Ansprüche 1 bis 3, wobei die Transaktion (TR1) eine Transaktion des Typs EMV ist, wobei der vorbestimmte Transaktionsbefehl einer der folgenden APDU-Befehle im Sinne des EMV-Standards ist:
- GPO;
- GAC; und
- PIN-VERIFIZIERUNG.

5. Verfahren nach Anspruch 3, wobei:
die Transaktion (TR1) eine Transaktion des Typs MONEO ist, wobei der vorbestimmte Transaktionsbefehl einer der folgenden APDU-Befehle ist: BELASTUNG, RÜCKBUCHUNG BELASTUNG und PIN-VERIFIZIERUNG;
oder
die Transaktion (TR1) eine Transaktion des Typs GELDKARTE ist, wobei der vorbestimmte Transaktionsbefehl einer unter den folgenden APDU-Befehlen ist: BELASTUNG und ERSTATTUNG.

6. Verfahren nach einem der Ansprüche 1 bis 5, wobei das Verfahren außerdem enthält:
- Anhalten (S38) der Wiederaufladung des Akkus bei Feststellung, dass der Ladezustand des Akkus einen zweiten vorbestimmten Schwellen-Ladezustand (TH2) höher als der oder gleich dem ersten vorbestimmten Schwellen-Ladezustand (TH1) erreicht hat.

7. Verfahren nach einem der Ansprüche 1 bis 6, wobei die Stromversorgung ausgehend vom externen Endgerät durch externen Kontakt empfangen wird.

8. Verfahren nach Anspruch 7, wobei die Chipkarte vom Typ ISO 7816 ist, wobei die Stromversorgung ausgehend vom Endgerät durch Kontakt über den mit dem externen Endgerät verbundenen Kontakt Vcc empfangen wird.

9. Verfahren nach Anspruch 7 oder 8, wobei die Chipkarte die Wiederaufladung des Akkus gleichzeitig durch Kontakt und kontaktlos ausgehend vom externen Endgerät auslöst.

10. Verfahren nach einem der Ansprüche 1 bis 9, wobei das Verfahren außerdem vor dem Auslösen der Wiederaufladung des Akkus enthält:
- bei Feststellung (S50), dass der Ladezustand des Akkus niedriger ist als ein dritter Schwellen-Ladezustand (TH3), Senden (S54) eines ersten Befehls (CMD2) an das externe Endgerät, der fordert, dass die Transaktion durch Kontakt verarbeitet wird.

11. Verfahren nach Anspruch 10, wobei das Verfahren außerdem vor dem Auslösen der Wiederaufladung des Akkus enthält:
- bei Feststellung (S52), dass der Ladezustand des Akkus niedriger ist als der dritte Schwellen-Ladezustand (TH3), Senden (S56) eines zweiten Befehls (CMD3) an eine Benutzerschnittstelle der Chipkarte, um das Präsentieren einer Mitteilung (MSG1) an einen Benutzer zu verursachen, die anzeigt, dass die Transaktion durch Kontakt verarbeitet werden soll.

12. Verfahren nach einem der Ansprüche 1 bis 11, das enthält:
- Senden (S62) eines Verzögerungsbefehls (CMD4) an das externe Endgerät, der fordert, dass das externe Endgerät eine Verarbeitungszeit, die notwendig ist, um eine Verarbeitung während der Transaktion durchzuführen, künstlich verlängert, um die Durchführung der Wiederaufladung des Akkus zu ermöglichen.

13. Verfahren nach Anspruch 12, wobei die Transaktion vom Typ EMV ist, wobei der Verzögerungsbefehl die Verlängerung einer Verarbeitungszeit fordert, die vom externen Endgerät verwendet wird, um eine Verarbeitung in den vom EMV-Standard erlaubten Grenzen durchzuführen.

14. Verfahren nach einem der Ansprüche 1 bis 13, wobei die Chipkarte eine nicht wiederaufladbare Batterie enthält, wobei das Verfahren außerdem enthält:
- bei Feststellung (S70), dass der Ladezustand des Akkus niedriger ist als ein vierter Schwellen-Ladezustand (TH4), Auslösen der Wiederaufladung des Akkus ausgehend von der Batterie, um die vom externen Endgerät gelieferte Stromversorgung zu ersetzen oder zu ergänzen.

15. Chipkarte (CD1), die enthält:
- einen wiederaufladbaren Akku (8);
- ein Verarbeitungsmodul (MD2), das konfiguriert ist, eine Transaktion zu verarbeiten, während der die Chipkarte mit einem externen Endgerät (T) kommuniziert, mit dem die Chipkarte gekoppelt ist;
wobei die Chipkarte **dadurch gekennzeichnet ist, dass** sie außerdem enthält:
- ein Kommunikationsmodul (MD4), das konfiguriert ist, während der Verarbeitung der Transaktion einen vom externen Endgerät kommenden vorbestimmten Transaktionsbefehl zu empfangen, und ausgehend von einem aktuellen Ladezustand des Akkus festzustellen, dass der vorbestimmte Transaktionsbefehl eine Verarbeitungszeit durch die Chipkarte erfordert, die ausreichend lang ist, um eine Wiederaufladung des Akkus auf mindestens einen vorbestimmten ersten Schwellen-Ladezustand zu ermöglichen; und
- ein Steuermodul (MD6), das konfiguriert ist, als Antwort auf die Feststellung, dass der vorbestimmte Transaktionsbefehl eine ausreichend lange Verarbeitungszeit erfordert, die Wiederaufladung des Akkus unter Verwendung einer vom externen Endgerät gelieferten Stromversorgung auszulösen, um mindestens den ersten vorbestimmten Schwellen-Ladezustand zu erreichen.

## Claims

1. Control method implemented by a chip card (CD1) comprising a rechargeable battery (8), the method comprising:
- processing (S30) a transaction (TR1) in the course of which the chip card communicates with an external terminal (T) to which said chip card is coupled; and
- receiving (S32), in the course of said processing of the transaction, a predetermined transaction command (CMD1) from the external terminal;
the method being **characterized in that** it furthermore comprises:
- detecting (S32), based on a current state of charge of the battery, that said predetermined transaction command requires a time of processing, by said chip card, that is long enough to allow the battery to be recharged to at least a first predetermined threshold state of charge (TH1); and
- in response to said detection (S32), triggering (S34) the recharging of the battery using an electric power supply delivered by the external terminal so as to reach at least the first predetermined threshold state of charge.

2. Method according to Claim 1, wherein the first predetermined threshold state of charge corresponds to at least 50% of the maximum charge capacity of the battery.

3. Method according to Claim 1 or 2, wherein the chip card (CD1) triggers (S34) said recharging upon receipt of said transaction command (CMD1) only if the current state of charge (NC) of the battery is less than or equal to a predetermined minimum state of charge (THmin).

4. Method according to any one of Claims 1 to 3, wherein the transaction (TR1) is an EMV transaction, said predetermined transaction command being one of the following APDU commands within the context of the EMV standard:
- GPO;
- GAC; and
- PIN VERIFICATION.

5. Method according to Claim 3, wherein:
the transaction (TR1) is a MONEO transaction, said predetermined transaction command being one of the following APDU commands: DEBIT, DEBIT REVERSAL and PIN VERIFICATION;
or
the transaction (TR1) is a GELDKARTE transaction, said predetermined transaction command being one of the following APDU commands: DEBIT and REFUND.

6. Method according to any one of Claims 1 to 5, wherein the method furthermore comprises:
- stopping (S38) the recharging of the battery upon detection that the state of charge of the battery has reached a second predetermined threshold state of charge (TH2), greater than or equal to the first predetermined threshold state of charge (TH1).

7. Method according to any one of Claims 1 to 6, wherein the electric power supply is received, from the external terminal, in external contact-based mode.

8. Method according to Claim 7, wherein the chip card is an ISO 7816 chip card, the electric power supply being received, from the terminal, in contact-based mode via the Vcc contact connected to the external terminal.

9. Method according to Claim 7 or 8, wherein the chip card triggers the recharging of the battery, simultaneously in contact-based mode and in contactless mode, from the external terminal.

10. Method according to any one of Claims 1 to 9, wherein the method furthermore comprises, prior to said triggering of the recharging of the battery:
- upon detection (S50) that the state of charge of the battery is less than a third threshold state of charge (TH3), sending (S54), to the external terminal, a first command (CMD2) requesting that the transaction be processed in contact-based mode.

11. Method according to Claim 10, wherein the method furthermore comprises, prior to said triggering of the recharging of the battery:
- upon detection (S52) that the state of charge of the battery is less than the third threshold state of charge (TH3), sending (S56) a second command (CMD3) to a user interface of the chip card so as to cause a user to be presented with a notification (MSG1) indicating that the transaction should be processed in contact-based mode.

12. Method according to any one of Claims 1 to 11, comprising:
- sending (S62), to the external terminal, a delay command (CMD4) requesting that the external terminal artificially extend a processing time needed to carry out a processing operation during said transaction, so as to allow said recharging of the battery to be carried out.

13. Method according to Claim 12, wherein the traction is an EMV transaction, the delay command requesting the extension of a processing time used by said external terminal to carry out a processing operation within the limits authorized by the EMV standard.

14. Method according to any one of Claims 1 to 13, wherein the chip card comprises a non-rechargeable cell, the method furthermore comprising:
- upon detection (S70) that the state of charge of the battery is less than a fourth threshold state of charge (TH4), triggering the recharging of the battery from the cell in order to supplement or complement the electric power supply delivered by the external terminal.

15. Chip card (CD1) comprising:
- a rechargeable battery (8);
- a processing module (MD2) configured to process a transaction in the course of which the chip card communicates with an external terminal (T) to which said chip card is coupled;
the chip card being **characterized in that** it furthermore comprises:
- a communication module (MD4) configured to receive, in the course of said processing of the transaction, a predetermined transaction command from the external terminal and to detect, based on a current state of charge of the battery, that said predetermined transaction command requires a time of processing, by said chip card, that is long enough to allow the battery to be recharged to at least a first predetermined threshold state of charge; and
- a control module (MD6) configured, in response to said detection that the predetermined transaction command requires a long enough processing time, to trigger the recharging of the battery using an electric power supply delivered by the external terminal so as to reach at least the first predetermined threshold state of charge.
